# EUROPÄISCHE PATENTSCHRIFT

(11) **EP 3 495 681 B1**
(45) Veröffentlichungstag und Bekanntmachung des Hinweises auf die Patenterteilung: **24.02.2021**
(21) Anmeldenummer: 18205574.9
(22) Anmeldetag: 12.11.2018
(51) Int. Cl.: F16C 43/02, F16C 33/04, F16C 35/02, F16C 17/02, F16C 9/02, F16C 33/08, F16C 9/04

(54) **VORRICHTUNG, INSBESONDERE EINLEGEHILFE, ZUR GLEITLAGERSCHALENMONTAGE**
DEVICE, IN PARTICULAR INSERTION AID, FOR GLIDING MOUNTING BEARING SHELL
DISPOSITIF, EN PARTICULIER D'AIDE À LA POSE, DESTINÉ AU MONTAGE D'UN PALIER LISSE

(30) Priorität: 08.12.2017 DE 102017129233
(43) Veröffentlichungstag der Anmeldung: 12.06.2019
(73) Patentinhaber: MAN Truck & Bus SE, 80995 München (DE)
(72) Erfinder: Alexa, Heinrich, 90530 Wendelstein (DE); Croner, Jan, 90587 Veitsbronn (DE); Astorino, Giovanni, 90429 Nürnberg (DE); Wendler, Georg, 91239 Henfenfeld (DE)
(74) Vertreter: v. Bezold & Partner Patentanwälte - PartG mbB

(56) Entgegenhaltungen:
- EP-A1- 3 228 891
- JP-A- H0 768 427
- JP-A- 2010 125 572
- JP-A- 2013 215 848

## Beschreibung

Die Erfindung betrifft eine Vorrichtung, insbesondere eine Einlegehilfe, zur Montage einer Gleitlagerschale in einer Lageraufnahme eines Bauteils.

Zweiteilige Gleitlager sind vor der Montage in zwei als Halbschalen ausgebildete Gleitlagerschalen geteilt. Eine erste Gleitlagerschale wird in eine Lageraufnahme eines Bauteils, zum Beispiel eines Pleuels oder eines Lagerbocks, eingesetzt. Die zweite Gleitlagerschale wird in einer Lageraufnahme eines Bauteildeckels, zum Beispiel eines Pleueldeckels oder eines Lagerbockdeckels, eingesetzt. Eine zu lagernde Welle wird in die Gleitlagerschale in der Lageraufnahme des Bauteils eingelegt. Schließlich wird der Bauteildeckel auf das Bauteil aufgesetzt und an diesem beispielsweise mittels Schrauben befestigt.

Typischerweise weisen Gleitlagerschalen eine sogenannte Spreizung auf. Damit sind die Gleitlagerschalen im Durchmesser ein wenig größer als die Lageraufnahmen und werden beim Einlegen in die Lageraufnahmen ein wenig elastisch verformt. Beim Einlegen kommt die Gleitlagerschale in Kontakt mit einer (metallischen) Kante der Lageraufnahme. Dabei kann am Rücken der Gleitlagerschale Material abgeschabt werden. Das abgeschabte Material kann in das Gleitlager gelangen oder sich zwischen Lagerschale und Lageraufnahme klemmen. Beides kann zum Versagen des Lagers und Folgeschäden beispielsweise bis hin zu einem Motorschaden führen.

Die JP 2013 215848 A, die JP H07 68427 A und die JP 2010 125572 A offenbaren Maschinen zum maschinellen Einsetzen einer Gleitlagerschale in eine Lageraufnahme Die EP 3 228 891 A1 betrifft eine Vorrichtung zum Zurücksetzen einer aus einer Aufnahme auf einer Welle zumindest teilweise herausgerutschten Lagerschale, wobei die Vorrichtung als handbetätigbares Werkzeug ausgebildet ist.

Der Erfindung liegt die Aufgabe zu Grunde, den Montagevorgang bei Gleitlagerschalen zu verbessern. Insbesondere soll ein Materialabrieb an einem Lagerrücken des Gleitlagers beim Einlegen des Gleitlagers in eine Lageraufnahme verhindert oder zumindest verringert werden. Die Aufgabe wird gelöst durch eine Verwendung gemäß dem unabhängigen Anspruch. Vorteilhafte Weiterbildungen sind in den abhängigen Ansprüchen und der Beschreibung angegeben.

Die Vorrichtung ist insbesondere als Einlegehilfe für Gleitlager ausgebildet. Die Vorrichtung dient zur Montage einer Gleitlagerschale eines Gleitlagers in einer Lageraufnahme eines Bauteils für ein Kraftfahrzeug, vorzugsweise Nutzfahrzeug. Das Bauteil kann insbesondere ein Lagerbockteil (z. B. Unterteil oder Deckel) oder ein Pleuelteil (z. B. Pleuelstange oder Pleueldeckel) sein. Die Vorrichtung weist einen ersten Anbringungsbereich zum lösbaren Anbringen der Vorrichtung an dem Bauteil auf. Die Vorrichtung weist einen ersten Abstützbereich zum Abstützen der Gleitlagerschale während eines Einlegens der Gleitlagerschale in die Lageraufnahme des Bauteils auf.

Insbesondere steht der Abstützbereich im montierten Zustand der Vorrichtung über eine Außenkante der Lageraufnahme des Bauteils vor. Während des Einlegens in die Lageraufnahme kann die Gleitlagerschale an dem Abstützbereich entlang gleiten, sodass die Gleitlagerschale nicht in Kontakt mit einer Kante der Lageraufnahme kommt. Damit kann verhindert werden, dass Material an einem Lagerrücken der Gleitlagerschale abgeschabt wird. Die Vorrichtung kann auf einfache Weise lösbar an dem Bauteil angebracht werden.

Auch wenn hierin teilweise auf einen "ersten" Anbringungsbereich und einen "ersten" Abstützbereich Bezug genommen wird, kann der "erste" Anbringungsbereich der einzige Anbringungsbereich der Vorrichtung und der "erste" Abstützbereich der einzige Abstützbereich der Vorrichtung sein.

In einem bevorzugten Ausführungsbeispiel ist der erste Anbringungsbereich und/oder der erste Abstützbereich aus einem Kunststoffmaterial und/oder einem Elastomermaterial hergestellt. Damit kann eine geeignete Materialpaarung zwischen der Vorrichtung und der Gleitlagerschale vorgesehen werden, die einen Materialabrieb an einem Lagerrücken der Gleitlagerschale verhindern kann. Die Materialpaarung kann ferner eine Montagekraft zum Einlegen der Gleitlagerschale in die Lageaufnahme verringern, da die Gleitlagerschale mit geringem Widerstand an dem ersten Abstützbereich entlang gleiten kann. Zusätzlich kann eine mögliche Beschädigung des Bauteils durch die Vorrichtung verhindert werden. Dies kann beispielsweise bei "gecrackten" bzw. bruchgetrennten Pleueln wichtig sein, da hier die Bruchflächen nicht verändert werden sollten.

In einem weiteren bevorzugten Ausführungsbeispiel sind der erste Anbringungsbereich und der erste Abstützbereich integral aus einem Stück hergestellt. Damit kann die Vorrichtung auf einfache Weise hergestellt werden.

Vorzugsweise bilden der erste Anbringungsbereich und der erste Abstützbereich zusammen eine Pilzform.

In einem Ausführungsbeispiel ist der erste Anbringungsbereich als ein (bspw. zylindrischer) Zapfen zum Einstecken in ein Loch (zum Beispiel Schraubenloch) des Bauteils ausgebildet. Alternativ kann der erste Anbringungsbereich als eine (bspw. zylindrische) Aufnahme, insbesondere eine Schraubenschaftaufnahme, zum Aufstecken auf einen an dem Bauteil befestigten Schraubenschaft einer Schraube ausgebildet sein. Somit kann der erste Anbringungsbereich für verschiedene Anwendungsmöglichkeiten angepasst sein. Insbesondere können bereits vorhandene Elemente (zum Beispiel Schrauben oder Schraubenlöcher) am Bauteil bzw. Bauteildeckel zum Verbinden mit dem ersten Anbringungsbereich der Vorrichtung verwendet werden. Folglich müssen keine separaten Elemente am Bauteil und Bauteildeckel zum Anbringen der Vorrichtung vorgesehen werden.

In einem weiteren Ausführungsbeispiel weist der erste Anbringungsbereich einen Verjüngungsabschnitt auf, in dem sich der erste Anbringungsbereich verjüngt. Der Verjüngungsabschnitt kann das Anbringen der Vorrichtung an dem Bauteil erleichtern. Ein als Zapfen ausgebildeter erster Anbringungsbereich kann mittels des Verjüngungsbereichs einfacher in ein Loch des Bauteils eingesteckt werden. Ein als Aufnahme ausgebildeter erster Anbringungsbereich kann mittels des Verjüngungsbereichs einfacher auf einen Schraubenschaft aufgesteckt werden.

In einer Ausführungsform ist der erste Abstützbereich angrenzend an den ersten Anbringungsbereich ausgebildet und/oder der erste Abstützbereich erstreckt sich ausgehend von einer Mittelachse, insbesondere einer Längsachse, der Vorrichtung, radial nach außen.

In einer weiteren Ausführungsform ist der erste Abstützbereich rotationssymmetrisch um eine Mittelachse des ersten Abstützbereichs ausgebildet. Damit kann die Vorrichtung unabhängig von einer Ausrichtung der Vorrichtung um einen Drehwinkel um die Mittelachse verwendet werden.

Rotationssymmetrie liegt vor, wenn eine Drehung um jeden beliebigen Winkel um eine Achse das Objekt auf sich selbst abbildet.

In einer weiteren Ausführungsform ist der erste Abstützbereich als ein Gleitanlagebereich ausgebildet, der die Gleitlagerschale beim Einlegen zum Verringern eines Materialabriebs an einem Lagerrücken der Gleitlagerschale gleitend kontaktiert.

In einer Ausführungsvariante weist die Vorrichtung ferner eine, insbesondere ringförmige und/oder ebene, Anlagefläche zum Auflegen der Vorrichtung auf das Bauteil auf.

In einer weiteren Ausführungsvariante weist der erste Abstützbereich die Anlagefläche auf und/oder die Anlagefläche grenzt an den ersten Anbringungsbereich.

In einem Ausführungsbeispiel weist die Vorrichtung ferner einen Griffbereich zum (händischen) Greifen und Führen der Vorrichtung. Insbesondere kann der Griffbereich angrenzend an den ersten Abstützbereich und/oder gegenüberliegend zu dem ersten Anbringungsbereich angeordnet sein.

In einem weiteren Ausführungsbeispiel weist die Vorrichtung ferner einen zweiten Anbringungsbereich zum Anbringen der Vorrichtung an einem weiteren Bauteil mit einer Lageraufnahme auf. Insbesondere kann sich der zweite Anbringungsbereich von dem ersten Anbringungsbereich unterscheiden. Alternativ oder zusätzlich weist die Vorrichtung einen zweiten Abstützbereich zum Abstützen der Gleitlagerschale während eines Einlegens der Gleitlagerschale in die Lageraufnahme des weiteren Bauteils auf. Insbesondere kann sich der zweite Abstützbereich von dem ersten Abstützbereich unterscheiden. Damit können in der Vorrichtung mehrere Anwendungsfälle kombiniert werden. Zum Beispiel kann die Vorrichtung mit dem ersten Anbringungsbereich an einem Hauptlagerbock einer Kurbelwelle und mit dem zweiten Anbringungsbereich an einem Pleuel verwendet werden.

In einer Weiterbildung ist der zweite Anbringungsbereich an einem dem ersten Anbringungsbereich gegenüberliegendem Ende der Vorrichtung angeordnet. Alternativ oder zusätzlich sind der zweite Abstützbereich und der erste Abstützbereich zwischen dem ersten Anbringungsbereich und dem zweiten Anbringungsbereich angeordnet.

Es ist auch möglich, dass sich ein Durchmesser (zum Beispiel Innendurchmesser oder Außendurchmesser) des als (bspw. zylindrischer) Zapfen oder als (bspw. zylindrische) Aufnahme ausgebildeten ersten Anbringungsbereichs sich von einem Durchmesser des als (bspw. zylindrischer) Zapfen oder als (bspw. zylindrischer) Aufnahme ausgebildeten zweiten Anbringungsbereichs unterscheidet. Alternativ oder zusätzlich können der erste Abstützbereich und der zweite Abstützbereich unterschiedlich weit vorstehen.

In einer Ausführungsform weist die Vorrichtung eine Mehrzahl von, insbesondere gleich ausgebildeten, ersten Anbringungsbereichen auf. Alternativ oder zusätzlich weist die Vorrichtung eine Mehrzahl von, insbesondere gleich ausgebildeten, ersten Abstützbereichen zum Abstützen einer Mehrzahl von Gleitlagerschalen während eines Einlegens der Mehrzahl von Gleitlagerschalen in einer Mehrzahl von Lageraufnahmen einer Mehrzahl von Bauteilen auf. Somit können beispielsweise bei einer Serienmontage mehrere Lagerschalen in nebeneinanderliegende Lageraufnahmen gleichzeitig oder nacheinander eingelegt werden, wobei die Vorrichtung nur einmal zu Beginn angebracht werden muss.

In einer Weiterbildung weist die Vorrichtung einen länglichen Körper, insbesondere eine Leiste oder einen Stab, auf. Die Mehrzahl von ersten Anbringungsbereichen und/oder die Mehrzahl von ersten Abstützbereichen sind beabstandet voneinander mit dem länglichen Körper verbunden, insbesondere an dem länglichen Körper befestigt.

Die Erfindung betrifft auch eine Verwendung einer Vorrichtung wie hierin offenbart beim Einlegen einer Gleitlagerschale in eine Lageraufnahme eines Bauteils.

Vorzugsweise weist die Verwendung ein Anbringen der Vorrichtung an dem Bauteil mittels des ersten Anbringungsbereichs auf, sodass der erste Abstützbereich über eine Außenkante der Lageraufnahme übersteht. Die Verwendung weist ein Einlegen einer ersten Gleitlagerschale, insbesondere einer ersten Gleitlagerhalbschale, in die Lageraufnahme des Bauteils auf, wobei sich die erste Gleitlagerschale während des Einlegens an dem überstehenden ersten Abstützbereich abstützt, sodass die erste Gleitlagerschale beabstandet zu der Außenkante der Lageraufnahme des Bauteils ist. Die Verwendung weist ein Entfernen der Vorrichtung nach dem Einlegen der Gleitlagerschale in die Lageraufnahme des Bauteils auf.

Insbesondere kann die Gleitlagerschale während des Einlegens an dem ersten Abstützbereich entlang gleiten.

Vorzugsweise kann der erste Abstützbereich in einem Bereich kleiner als 2 %, insbesondere in einem Bereich zwischen 0,5 % und 2 %, eines Lagerdurchmessers der Lageraufnahme über die Außenkante der Lageraufnahme überstehen. Beispielsweise kann der erste Abstützbereich größer als 0 mm und/oder kleiner als 5 mm über die Außenkante der Lageraufnahme überstehen. Insbesondere kann der erste Abstützbereich zwischen ungefähr 0,5 mm und ungefähr 2 mm über die Außenkante der Lageraufnahme überstehen.

In einer Weiterbildung weist das Bauteil eine Befestigungselementaufnahme, insbesondere ein Schraubenloch, zur Aufnahme eines Befestigungselements, insbesondere einer Schraube, zum Befestigen eines Deckels, insbesondere eines Lagerbockdeckels oder eines Pleueldeckels, auf. Die Vorrichtung kann dann an dem Bauteil mittels des ersten Anbringungsbereichs der in der Befestigungselementaufnahme oder an dem Befestigungselement angebracht ist, lösbar angebracht werden. Damit kann die Vorrichtung an Elementen des Bauteils und des Bauteildeckels befestigt werden, die ohnehin zum Befestigen des Bauteildeckels am Bauteil vorhanden sind.

In einem weiteren Ausführungsbeispiel weist die Verwendung ferner ein Anbringen der Vorrichtung an einem Deckel, insbesondere einem Lagerbockdeckel oder einem Pleueldeckel, für das Bauteil mittels des ersten Anbringungsbereichs auf, sodass der erste Abstützbereich über eine Außenkante einer Lageraufnahme des Deckels übersteht. Die Verwendung weist ferner ein Einlegen einer zweiten Gleitlagerschale, insbesondere einer zweiten Gleitlagerhalbschale, in die Lageraufnahme des Deckels auf, wobei die zweite Gleitlagerschale sich an dem überstehenden ersten Abstützbereich abstützt, sodass während des Einlegens die zweite Gleitlagerschale beabstandet zu der Außenkante der Lageraufnahme des Deckels ist. Die Verwendung weist ferner ein Entfernen der Vorrichtung nach dem Einlegen der zweiten Gleitlagerschale in die Lageraufnahme des Deckels und ein Befestigen des Deckels an dem Bauteil auf. Damit kann die gleiche Vorrichtung mit sowohl dem Bauteil als auch dem Deckel für das Bauteil verwendet werden. Es ist allerdings auch möglich, dass unterschiedliche Vorrichtungen für das Bauteil und den Deckel verwendet werden.

Insbesondere kann der Deckel eine Befestigungselementaufnahme, insbesondere ein Schraubenloch, zur Aufnahme eines Befestigungselements, insbesondere einer Schraube, zum Befestigen des Deckels an dem Bauteil aufweisen. Zusätzlich kann die Vorrichtung an dem Deckel mittels des ersten Anbringungsbereichs, der in der Befestigungselementaufnahme oder an dem Befestigungselement angebracht ist, lösbar angebracht sein.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Seitenansicht einer Einlegehilfe für Gleitlager gemäß einer ersten Ausführungsform;
- Figur 2: eine Seitenansicht eines Pleuelteils mit einer Gleitlagerhalbschale und der Einlegehilfe gemäß der ersten Ausführungsform;
- Figur 3: eine Detailansicht des Pleuelteils von Figur 2;
- Figur 4: eine Seitenansicht einer Einlegehilfe für Gleitlager gemäß einer zweiten Ausführungsform;
- Figur 5: eine Seitenansicht einer Einlegehilfe für Gleitlager gemäß einer dritten Ausführungsform;
- Figur 6: eine perspektivische Ansicht einer Lagerbockbaugruppe mit der Einlegehilfe für Gleitlager gemäß der dritten Ausführungsform;
- Figur 7: eine Längsschnittansicht durch eine Einlegehilfe für Gleitlager gemäß einer vierten Ausführungsform; und
- Figur 8: eine Seitenansicht durch einen Pleueldeckel mit einer Einlegehilfe für Gleitlager gemäß der vierten Ausführungsform in einer Teilschnittansicht.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

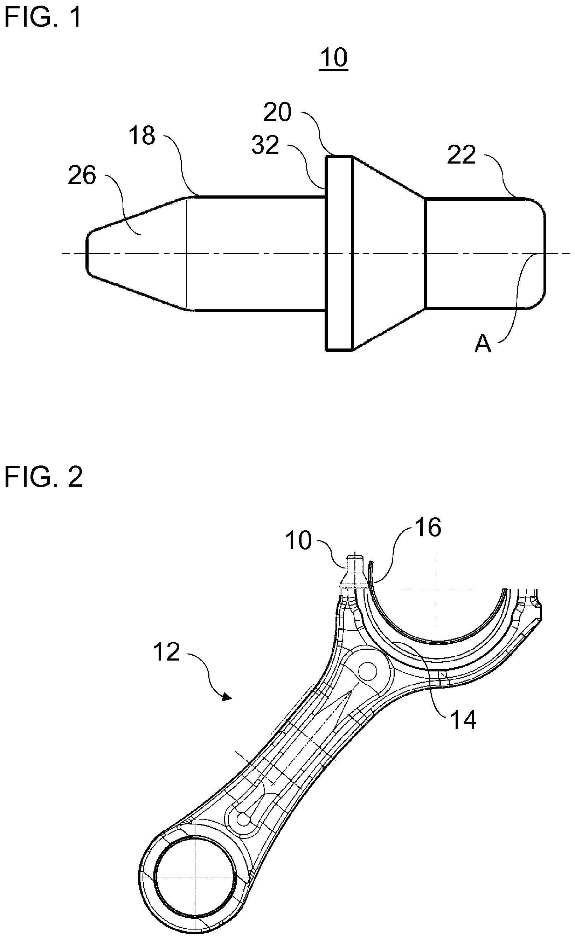

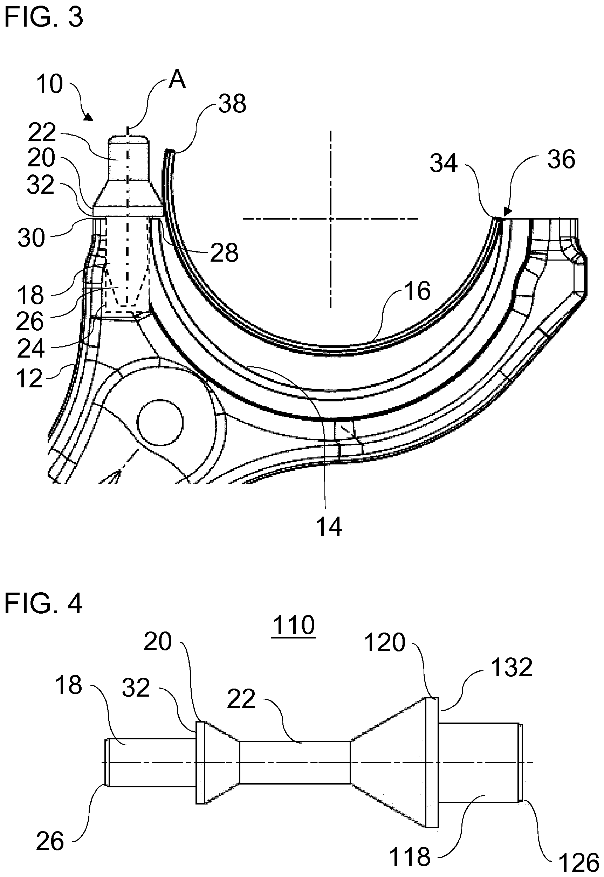

Zunächst wird auf die Figuren 1 bis 3 Bezug genommen. Die Figur 1 zeigt eine Einlegehilfe 10 für Gleitlager. Die Figuren 2 und 3 zeigen die Einlegehilfe 10 montiert an einem Bauteil 12 mit einer Lageraufnahme 14 und eine Gleitlagerschale 16 während des Einlegens in die Lageraufnahme 14. Die Einlegehilfe 10 ist hierin auch als eine Vorrichtung zur Montage einer Gleitlagerschale eines Gleitlagers in einer Lageraufnahme eines Bauteils bezeichnet. Das Bauteil 12 kann beispielsweise ein Pleuelteil, wie dargestellt, oder ein Lagerbockteil einer Brennkraftmaschine sein. Die Brennkraftmaschine kann beispielsweise in einem Nutzfahrzeug, zum Beispiel einem Omnibus oder einem Lastkraftwagen, umfasst sein. Es ist allerdings auch möglich, die Einlegehilfe 10 in jeglicher anderen Maschine, die geteilte Gleitlager aufweist, zu verwenden.

Die Einlegehilfe 10 ist als länglicher Körper ausgebildet. Die Einlegehilfe 10 weist einen Anbringungsbereich 18, einen Abstützbereich 20 und einen Griffbereich 22 auf (siehe Figur 1).

Der Anbringungsbereich 18 und der Griffbereich 22 sind an freien Enden der Einlegehilfe 10 angeordnet. Der Abstützbereich 20 ist zwischen dem Anbringungsbereich 18 und dem Griffbereich 22 angeordnet. Der Anbringungsbereich 18 und der Abstützbereich 20 bilden zusammen eine Pilzform. Der Anbringungsbereich 18, der Abstützbereich 20 und der Griffbereich 22 sind integral aus einem Stück hergestellt. Es ist allerdings auch möglich, die Einlegehilfe 10 mehrteilig herzustellen. Vorzugsweise ist die Einlegehilfe 10, insbesondere der Abstützbereich 20 der Einlegehilfe 10, aus einem nicht-abrasiven Material hergestellt, zum Beispiel einem Kunststoffmaterial und/oder einem Elastomermaterial. Beispielsweise kann das Material der Einlegehilfe 10, insbesondere der Abstützbereich 20 der Einlegehilfe 10, aus einem Material hergestellt sein, das weicher (weniger hart) als das Material der Gleitlagerschale 16 ist.

Der Anbringungsbereich 18 ist dazu ausgebildet, an dem Bauteil 12 mit der Lageraufnahme 14 angebracht zu werden. In der gezeigten Ausführungsform ist der Anbringungsbereich 18 zapfenartig ausgebildet. Der Anbringungsbereich 18 kann in ein Schraubenloch 24 des Bauteils 12 eingesteckt werden (siehe Figur 3), um die Einlegehilfe 10 an dem Bauteil 12 anzubringen. Insbesondere ist der zapfenartige Anbringungsbereich 18 an das Schraubenloch 24 angepasst, sodass die Einlegehilfe 10 in eine Richtung senkrecht zu einer Mittelachse bzw. Längsachse A der Einlegehilfe 10 unbeweglich im Schraubenloch 24 ist. Mit anderen Worten gesagt, ein Außendurchmesser des Anbringungsbereichs 18 entspricht im Wesentlichen einem Innendurchmesser des Schraubenlochs 24. Das Schraubenloch 24 kann ohnehin im Bauteil 12 zur Befestigung eines (Lager-) Deckels, zum Beispiel eines Lagerbockdeckels oder eines Pleueldeckels, für das Bauteil 12 vorhanden sein. Somit ist es nicht notwendig, das Bauteil 12 zur Verwendung der Einlegehilfe 10 anzupassen.

Um das Einführen des Anbringungsbereichs 18 in das Schraubenloch 24 zu erleichtern, kann der Anbringungsbereich 18 einen Verjüngungsabschnitt 26 aufweisen. Am Verjüngungsabschnitt 26 verjüngt sich der Anbringungsbereich 18. Der Verjüngungsabschnitt 26 ist an einem freien Ende des Anbringungsbereichs 18 angeordnet. Der Verjüngungsabschnitt 26 kann als Fase ausgebildet sein.

Der Abstützbereich 20 weist eine an den Anbringungsbereich 18 angrenzende, ringförmige Anlagefläche 32 auf. Mit der Anlagefläche 32 kann die Einlegehilfe 10 im angebrachten Zustand auf einer Kontaktfläche 30 des Bauteils 12 aufliegen. Die Kontaktfläche 30 kann eben oder unregelmäßig sein. Zum Beispiel kann die Kontaktfläche 30 eine "gecrackte" bzw. bruchgetrennte Fläche eines Pleuels sein.

Der Abstützbereich 20 dient zum Abstützen der Gleitlagerschale 16 während des Einlegens der Gleitlagerschale 16 in die Lageraufnahme 14 des Bauteils 12. In der gezeigten Ausführungsform erstreckt sich der Abstützbereich 20 von der Mittelachse A radial nach außen. Im montierten Zustand der Einlegehilfe 10 steht ein radialer Außenabschnitt des Abstützbereiches 20 über eine scharfkantige, im Wesentlichen gradlinige Außenkante 28 der Lageraufnahme 14 über. Die Außenkante 28 begrenzt die Lageraufnahme 14 und die Kontaktfläche 30 des Bauteils 12.

Der Überstand des Abstützbereiches 20 über die Außenkante 28 bewirkt, dass die Gleitlagerschale 16 beim Einlegen in die Lageraufnahme 14 die Außenkante 28 nicht berührt. Im Einzelnen weist die Gleitlagerschale 16 vor dem Montieren eine sogenannte Spreizung auf, sodass ein Abstand der freien Enden der Gleitlagerschale 16 größer als ein Innendurchmesser der Lageraufnahme 14 ist. Beim Einlegen in die Lageraufnahme 14 werden die freien Enden der Gleitlagerschale 16 elastisch zueinander verformt. Insbesondere wird ein erstes freies Ende 34 der Gleitlagerschale 16 an einer der Außenkante 28 gegenüberliegenden Außenkante 36 der Lageraufnahme 14 angesetzt. Die Gleitlagerschale 16 wird in die Lageraufnahme 14 geschwenkt. Ein zweites Ende 38 der Gleitlagerschale 16 kommt in Kontakt mit dem Abstützbereich 20. Das zweite Ende 38 wird entlang des (weichen) Abstützbereiches 20 geführt und berührt die Außenkante 28 nicht. Dadurch kommt es zu keinen Riefen und keinem Spanabrieb an der Gleitlagerschale 16 während des Einlegens. Die Materialpaarung aus Metall der Gleitlagerschale 16 und Kunststoff/Elastomer der Einlegehilfe 10 gleitet gut aneinander. Die Montagekraft wird reduziert. Letztlich passiert das zweite Ende 38 der Gleitlagerschale 16 den Abstützbereich 20 und die Gleitlagerschale 16 schnappt in die Lageraufnahme 14 ein.

Es ist beispielsweise auch möglich, zwei Einleghilfen 10 beidseitig der Lageraufnahme 14 zu verwenden. Die Gleitlagerschale 16 kann dann zwischen den jeweiligen Abstützbereichen 20 der beiden Einlegehilfen 10 in die Lageraufnahme 16 eingeschoben werden.

Der Abstützbereich 20 kann in einem Bereich gleich oder größer als ungefähr 0,5 mm über die Außenkante 28 überstehen. Insbesondere kann der Abstützbereich 20 so dimensioniert sein, dass dieser zwischen ungefähr 0,5 mm und ungefähr 2 mm über die Außenkante 28 übersteht. Damit kann ein Abreiben der Gleitlagerschale 16 an der Außenkante 28 wirksam verhindert werden.

Die Einlegehilfe 10 kann auch zur Montage einer Gleitlagerschale im Deckel für das Bauteil 12 auf analoge Weise verwendet werden. Der Deckel kann dann mit montierter Gleitlagerschale an dem Bauteil 12 mit montierter Gleitlagerschale 16 montiert werden, insbesondere mittels einer in das Schraubenloch 24 eingreifenden Schraube.

Der Abstützbereich 20 ist rotationssymmetrisch um die Mittelachse A ausgebildet. Dadurch kann die Einlegehilfe 10 in jeglichem Drehwinkel um die Mittelachse A in das Schraubenloch 24 eingesetzt werden. Der Überstand des Abstützbereichs 20 über die Außenkante 28 bleibt gleich.

Mittels des Griffbereichs 22 kann die Einlegehilfe 10 händisch gegriffen und bewegt werden. Somit kann die Einlegehilfe 10 auf einfache Weise zum Bauteil 12 geführt und vom Bauteil 12 entfernt werden. Der Griffbereich 22 kann integral mit dem Vorsprungbereich 20 ausgebildet sein.

Die Figur 4 zeigt ein zweites Ausführungsbeispiel für die Einlegehilfe. Die Einlegehilfe 110 von Figur 4 weist den Anbringungsbereich 18, den Abstützbereich 20 und den Griffbereich 22 wie die Einlegehilfe 10 der Figuren 1 bis 3 auf.

Zusätzlich weist die Einlegehilfe 110 einen zweiten Anbringungsbereich 118 und einen zweiten Abstützbereich 120 auf. Die Anbringungsbereiche 18, 118 sind an gegenüberliegenden Enden der Einlegehilfe 110 angeordnet. Die Abstützbereiche 20, 120 sind zwischen den Anbringungsbereichen 18, 118 angeordnet.

Durch die zwei Anbringungsbereiche 18, 118 und die zwei Abstützbereiche 20, 120 kann die Einlegehilfe 110 als Einlegehilfe für Gleitlagerschalen zweier verschiedener Bauteile dienen. Beispielsweise kann der Anbringungsbereich 18 an das Schraubenloch 24 des Pleuelteils von den Figuren 2 und 3 angepasst sein. Der Anbringungsbereich 118 kann an ein anderes Schraubenloch beispielsweise eines Hauptlagerbocks einer Kurbelwellenlagerung angepasst sein. Somit kann die Einlegehilfe 110 zweifach verwendet werden.

Es ist prinzipiell möglich, eine Einlegehilfe vorzusehen, die n-fach verwendet werden kann, mit n verschiedenen Anbringungsbereichen und/oder Abstützbereichen, wobei n eine ganzzahlige natürliche Zahl sein kann.

Der zweite Anbringungsbereich 118 kann beispielsweise einen als Fase ausgebildeten Verjüngungsabschnitt 126 aufweisen. Der zweite Abstützbereich 120 kann eine ringförmige Anlagefläche 132 ähnlich zu der Anlagefläche 32 des ersten Abstützbereiches 20 aufweisen.

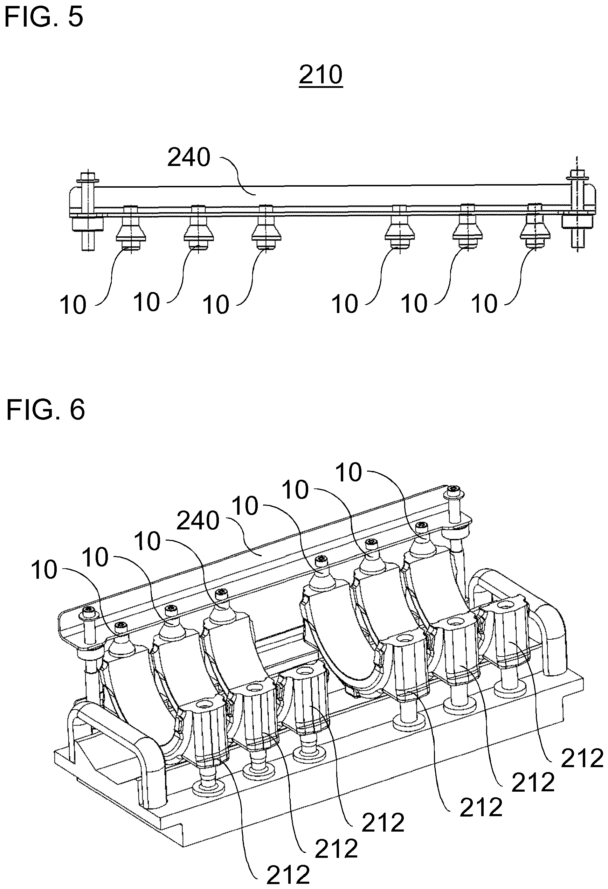

Die Figuren 4 und 5 zeigen ein drittes Ausführungsbeispiel für die Einlegehilfe. Die Einlegehilfe 210 von Figur 4 und Figur 5 weist eine Mehrzahl von den Einlegehilfen 10 und einen länglichen Körper 240 auf.

Im Einzelnen sind die Einlegehilfe 10 entlang des länglichen Körpers 240, zum Beispiel einer Leiste, beabstandet zueinander an dem länglichen Körper 240 befestigt. Die Einlegehilfe 210 ist so ausgebildet, dass die Anbringungsbereiche 18 der Einlegehilfen 10 an nebeneinander angeordneten Bauteilen 212, zum Beispiel Lagerbockteilen, angebracht werden können. Damit muss die Einlegehilfe 210 nur einmal montiert werden, um dann mehrere Gleitlagerschalen in die Bauteile 212 einzulegen.

Beispielsweise kann die Einlegehilfe 210 zwischen zwei und sechs Einlegehilfen 10 miteinander kombinieren. Es ist auch möglich, dass beispielsweise mehrere Einlegehilfen 110 (siehe Figur 4) miteinander kombiniert werden.

Die Einlegehilfe 210 kann neben den Anbringungsbereichen der Einlegehilfen 10 weitere Anbringungsbereiche aufweisen, die beispielsweise an entgegengesetzten Enden der Einlegehilfe 210 angeordnet sind.

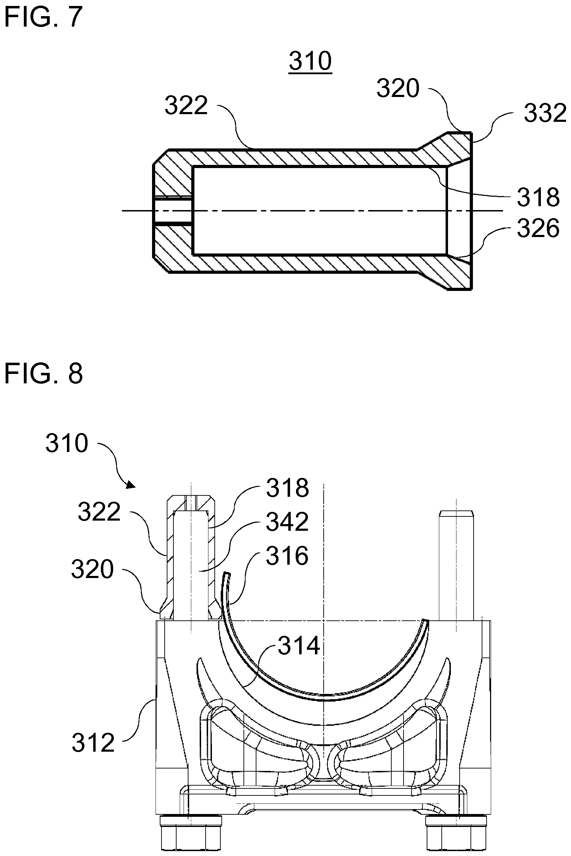

Die Figuren 7 und 8 zeigen ein viertes Ausführungsbeispiel für die Einlegehilfe. Die Einlegehilfe 310 von Figur 7 und Figur 8 weist einen Anbringungsbereich 318, einen Abstützbereich 320 und einen Griffbereich 322 auf.

Der Abstützbereich 320 und der Griffbereich 322 umgeben den Anbringungsbereich 318. Der Abstützbereich 320 und der Griffbereich 322 können beispielsweise ähnlich zu dem Abstützbereich 20 und dem Griffbereich 22 (siehe Figuren 1 bis 3) wie hierin offenbart ausgebildet sein.

Der Anbringungsbereich 318 ist als Aufnahme, insbesondere Sackloch, ausgebildet. Über den Anbringungsbereich 318 kann die Einlegehilfe 310 beispielsweise auf einen Schraubenschaft einer bereits vormontierten Schraube 342 gesteckt werden. Beispielsweise kann die Schraube 342 zum Verbinden des als Pleueldeckel ausgebildeten Bauteils 312 mit dem als Pleuel ausgebildeten Bauteil 12 (siehe Figuren 2 und 3) bereits am Bauteil 312 vormontiert sein, bevor die Gleitlagerschale 316 in die Lageraufnahme 314 des Bauteils 312 eingelegt wird. Um das Aufstecken auf die Schraube 342 zu erleichtern, kann der Anbringungsbereich 318 einen Verjüngungsbereich 336 aufweisen, der sich zu einer Öffnung des Anbringungsbereichs 318 hin erweitert. Mittels einer Anlagefläche 332 kann die Einlegehilfe 310 auf dem Bauteil 312 aufliegen.

Die Erfindung ist nicht auf die vorstehend beschriebenen bevorzugten Ausführungsbeispiele beschränkt. Insbesondere beansprucht die Erfindung auch Schutz für den Gegenstand und die Merkmale der Unteransprüche unabhängig von den in Bezug genommenen Ansprüchen. Insbesondere sind die Merkmale des unabhängigen Anspruchs 1 unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration des Anbringungsbereichs und des Abstützbereichs des unabhängigen Anspruchs 1 offenbart.

### Bezugszeichenliste

- A: Mittelachse
- 10: Einlegehilfe (Vorrichtung zur Montage einer Gleitlagerschale)
- 12: Bauteil
- 14: Lageraufnahme
- 16: Gleitlagerschale
- 18: (Erster) Anbringungsbereich
- 20: (Erster) Abstützbereich
- 22: Griffbereich
- 24: Schraubenloch
- 26: Verjüngungsabschnitt
- 28: Außenkante
- 30: Kontaktfläche
- 32: Anlagefläche
- 34: Erstes Ende
- 36: Außenkante
- 38: Zweites Ende
- 110: Einlegehilfe
- 118: Zweiter Anbringungsbereich
- 120: Zweiter Abstützbereich
- 126: Verjüngungsabschnitt
- 132: Zweite Anlagefläche
- 210: Einlegehilfe
- 212: Bauteil
- 240: Länglicher Körper
- 310: Einlegehilfe
- 312: Bauteil
- 314: Lageraufnahme
- 318: Anbringungsbereich
- 320: Abstützbereich
- 322: Griffbereich
- 332: Anlagefläche
- 342: Schraube

## Patentansprüche

1. Verwendung einer Vorrichtung (10; 110; 210; 310), insbesondere Einlegehilfe, beim Einlegen einer Gleitlagerschale (16) in eine Lageraufnahme (14) eines Bauteils (12; 212; 312), insbesondere eines Lagerbockteils oder eines Pleuelteils für ein Kraftfahrzeug, vorzugsweise Nutzfahrzeug, wobei die Vorrichtung (10; 110; 210; 310) aufweist:
einen ersten Anbringungsbereich (18; 118; 318) zum lösbaren Anbringen der Vorrichtung (10; 110; 210; 310) an dem Bauteil (12; 212; 312);
einen ersten Abstützbereich (20; 120; 320) zum Abstützen der Gleitlagerschale (16, 316) während eines Einlegens der Gleitlagerschale (16, 316) in die Lageraufnahme (14, 314) des Bauteils (12; 212; 312); und
einen Griffbereich (22; 322) zum Greifen und Führen der Vorrichtung (10; 110; 210; 310), wobei der Griffbereich (22; 322) angrenzend an den ersten Abstützbereich (20; 120; 320) gegenüberliegend zu dem ersten Anbringungsbereich (18; 118; 318) angeordnet ist.

2. Verwendung nach Anspruch 1, wobei:
der erste Anbringungsbereich (18; 118; 318) und/oder der erste Abstützbereich (20; 120; 320) aus einem Kunststoffmaterial und/oder einem Elastomermaterial hergestellt ist; und/oder
der erste Anbringungsbereich (18; 118; 318) und der erste Abstützbereich (20; 120; 320) integral aus einem Stück hergestellt sind; und/oder
der erste Anbringungsbereich (18; 118) und der erste Abstützbereich (20; 120) zusammen eine Pilzform bilden.

3. Verwendung nach Anspruch 1 oder Anspruch 2, wobei:
der erste Anbringungsbereich (18; 118) als ein Zapfen zum Einstecken in ein Loch (24) des Bauteils (12; 212; 312) ausgebildet ist; oder
der erste Anbringungsbereich (318) als eine Aufnahme, insbesondere eine Schraubenschaftaufnahme, zum Aufstecken auf einen an dem Bauteil (12; 212; 312) befestigten Schraubenschaft einer Schraube (342) ausgebildet ist.

4. Verwendung nach einem der vorherigen Ansprüche, wobei:
der erste Anbringungsbereich (18; 118; 318) einen Verjüngungsabschnitt (26; 126; 326) aufweist, in dem sich der erste Anbringungsbereich (18; 118; 318) verjüngt.

5. Verwendung nach einem der vorherigen Ansprüche, wobei:
der erste Abstützbereich (20; 120; 320) angrenzend an den ersten Anbringungsbereich (18; 118; 318) ausgebildet ist; und/oder
der erste Abstützbereich (20; 120; 320) sich ausgehend von einer Mittelachse (A), insbesondere einer Längsachse, der Vorrichtung (10; 110; 210; 310), radial nach außen erstreckt; und/oder
der erste Abstützbereich (20; 120; 320) rotationssymmetrisch um eine Mittelachse (A) des ersten Abstützbereichs (20; 120; 320) ausgebildet ist; und/oder
der erste Abstützbereich (20; 120; 320) als ein Gleitanlagebereich, der die Gleitlagerschale (16, 316) beim Einlegen zum Verringern eines Materialabriebs an einem Lagerrücken der Gleitlagerschale (16, 316) gleitend kontaktiert, ausgebildet ist.

6. Verwendung nach einem der vorherigen Ansprüche, wobei die Vorrichtung (10; 110; 210; 310) ferner aufweist:
eine, insbesondere ringförmige und/oder ebene, Anlagefläche (32; 132; 332) zum Auflegen der Vorrichtung auf das Bauteil (12; 212; 312), wobei, vorzugsweise, der erste Abstützbereich (20; 120; 320) die Anlagefläche (32; 132; 332) aufweist und/oder die Anlagefläche (32; 132; 332) an den ersten Anbringungsbereich (18; 118; 318) angrenzt.

7. Verwendung nach einem der vorherigen Ansprüche, wobei die Vorrichtung (10; 110; 210; 310) ferner aufweist:
einen zweiten Anbringungsbereich (118) zum Anbringen der Vorrichtung (110) an einem weiteren Bauteil (12; 212; 312) mit einer Lageraufnahme (14, 314), wobei der zweite Anbringungsbereich (118) sich von dem ersten Anbringungsbereich (18) unterscheidet; und/oder
einen zweiten Abstützbereich (120) zum Abstützen der Gleitlagerschale (16, 316) während eines Einlegens der Gleitlagerschale (16, 316) in die Lageraufnahme (14, 314) des weiteren Bauteils (12; 212; 312), wobei der zweite Abstützbereich (120) sich von dem ersten Abstützbereich (20) unterscheidet.

8. Verwendung nach Anspruch 7, wobei:
der zweite Anbringungsbereich (118) an einem dem ersten Anbringungsbereich (18) gegenüberliegendem Ende der Vorrichtung (110) angeordnet ist; und/oder
der zweite Abstützbereich (120) und der erste Abstützbereich (20) zwischen dem ersten Anbringungsbereich (18) und dem zweiten Anbringungsbereich (118) angeordnet sind; und/oder
ein Durchmesser des als Zapfen oder als Aufnahme ausgebildeten ersten Anbringungsbereichs (18) sich von einem Durchmesser des als Zapfen oder Aufnahme ausgebildeten zweiten Anbringungsbereichs (118) unterscheidet; und/oder
der erste Abstützbereich (20) und der zweite Abstützbereich (120) unterschiedlich weit vorstehen.

9. Verwendung nach einem der vorherigen Ansprüche, wobei:
die Vorrichtung (210) eine Mehrzahl von, insbesondere gleich ausgebildeten, ersten Anbringungsbereichen (18; 118; 318) aufweist; und/oder
die Vorrichtung (210) eine Mehrzahl von, insbesondere gleich ausgebildeten, ersten Abstützbereichen (20; 120; 320) zum Abstützen einer Mehrzahl von Gleitlagerschalen (16, 316) während eines Einlegens der Mehrzahl von Gleitlagerschalen (16, 316) in einer Mehrzahl von Lageraufnahmen (14, 314) einer Mehrzahl von Bauteilen (12; 212; 312) aufweist.

10. Verwendung nach Anspruch 9, wobei die Vorrichtung (10; 110; 210; 310) ferner aufweist:
einen länglichen Körper (240), insbesondere eine Leiste oder einen Stab, an dem die Mehrzahl von ersten Anbringungsbereichen (18; 118; 318) und/oder die Mehrzahl von ersten Abstützbereichen (20; 120; 320) beabstandet voneinander verbunden, insbesondere befestigt, sind.

11. Verwendung nach einem der vorherigen Ansprüche, ferner aufweisend:
Anbringen der Vorrichtung (10) an dem Bauteil (12) mittels des ersten Anbringungsbereichs (18), sodass der erste Abstützbereich (20) über eine Außenkante (28) der Lageraufnahme (14) übersteht;
Einlegen einer ersten Gleitlagerschale (16), insbesondere einer ersten Gleitlagerhalbschale, in die Lageraufnahme (14) des Bauteils (12), wobei sich die erste Gleitlagerschale (16) während des Einlegens an dem überstehenden ersten Abstützbereich (20) abstützt, sodass die erste Gleitlagerschale (16) beabstandet zu der Außenkante (28) der Lageraufnahme (14) des Bauteils (12) ist; und
Entfernen der Vorrichtung (10) nach dem Einlegen der Gleitlagerschale (16) in die Lageraufnahme (14) des Bauteils (12).

12. Verwendung nach Anspruch 11, wobei:
das Bauteil (12) eine Befestigungselementaufnahme (24), insbesondere ein Schraubenloch, zur Aufnahme eines Befestigungselements (342), insbesondere einer Schraube, zum Befestigen eines Deckels (312), insbesondere eines Lagerbockdeckels oder eines Pleueldeckels, aufweist; und
die Vorrichtung (10) an dem Bauteil (12) mittels des ersten Anbringungsbereichs (18), der in der Befestigungselementaufnahme (24) oder an dem Befestigungselement (342) angebracht ist, lösbar angebracht ist.

13. Verwendung nach Anspruch 11 oder Anspruch 12, ferner aufweisend:
Anbringen der Vorrichtung (10) an einem Deckel (312), insbesondere einem Lagerbockdeckel oder einem Pleueldeckel, für das Bauteil (12) mittels des ersten Anbringungsbereichs (18), sodass der erste Abstützbereich (20) über eine Außenkante einer Lageraufnahme (314) des Deckels (312) übersteht;
Einlegen einer zweiten Gleitlagerschale (316), insbesondere einer zweiten Gleitlagerhalbschale, in eine Lageraufnahme (314) des Deckels (312), wobei die zweite Gleitlagerschale (316) sich an dem überstehenden ersten Abstützbereich (20) abstützt, sodass während des Einlegens die zweite Gleitlagerschale (316) beabstandet zu der Außenkante der Lageraufnahme (314) des Deckels (312) ist; und
Entfernen der Vorrichtung (10) nach dem Einlegen der zweiten Gleitlagerschale (316) in die Lageraufnahme (314) des Deckels (312); und
Befestigen des Deckels (312) an dem Bauteil (12).

## Claims

1. Use of an apparatus (10; 110; 210; 310), in particular an insertion aid, during the insertion of a plain bearing shell (16) into a bearing seat (14) of a component (12; 212; 312), in particular of a bearing block part or a connecting rod part for a motor vehicle, preferably a commercial vehicle, the apparatus (10; 110; 210; 310) having:
a first attachment region (18; 118; 318) for releasably attaching the apparatus (10; 110; 210; 310) to the component (12; 212; 312);
a first supporting region (20; 120; 320) for supporting the plain bearing shell (16, 316) during an insertion of the plain bearing shell (16, 316) into the bearing seat (14, 314) of the component (12; 212; 312); and
a grip region (22; 322) for gripping and guiding the apparatus (10; 110; 210; 310), the grip region (22; 322) being arranged so as to adjoin the first supporting region (20; 120; 320), so as to lie opposite the first attachment region (18; 118; 318).

2. Use according to Claim 1:
the first attachment region (18; 118; 318) and/or the first supporting region (20; 120; 320) being produced from a plastic material and/or an elastomer material; and/or
the first attachment region (18; 118; 318) and the first supporting region (20; 120; 320) being produced integrally from one piece; and/or
the first attachment region (18; 118) and the first supporting region (20; 120) together forming a mushroom shape.

3. Use according to Claim 1 or Claim 2:
the first attachment region (18; 118) being configured as a pin for plugging into a hole (24) of the component (12; 212; 312); or
the first attachment region (318) being configured as a seat, in particular a screw shank receptacle, for plugging onto a screw shank of a screw (342), which screw shank is fastened to the component (12; 212; 312).

4. Use according to one of the preceding claims:
the first attachment region (18; 118; 318) having a tapering section (26; 126; 326), in which the first attachment region (18; 118; 318) tapers.

5. Use according to one of the preceding claims:
the first supporting region (20; 120; 320) being configured so as to adjoin the first attachment region (18; 118; 318); and/or
the first supporting region (20; 120; 320) extending radially to the outside starting from a centre axis (A), in particular a longitudinal axis, of the apparatus (10; 110; 210; 310); and/or
the first supporting region (20; 120; 320) being of rotationally symmetrical configuration about a centre axis (A) of the first supporting region (20; 120; 320); and/or
the first supporting region (20; 120; 320) being configured as a plain bearing region which makes sliding contact with the plain bearing shell (16, 316) during the insertion in order to reduce a material abrasion on a bearing back of the plain bearing shell (16, 316).

6. Use according to one of the preceding claims, the apparatus (10; 110; 210; 310) having, furthermore:
a contact face (32; 132; 332) which is, in particular, annular and/or planar, for placing the apparatus onto the component (12; 212; 312), the first supporting region (20; 120; 320) preferably having the contact face (32; 132; 332) and/or the contact face (32; 132; 332) adjoining the first attachment region (18; 118; 318).

7. Use according to one of the preceding claims, the apparatus (10; 110; 210; 310) having, furthermore:
a second attachment region (118) for attaching the apparatus (110) to a further component (12; 212; 312) with a bearing seat (14, 314), the second attachment region (118) differing from the first attachment region (18); and/or
a second supporting region (120) for supporting the plain bearing shell (16, 316) during an insertion of the plain bearing shell (16, 316) into the bearing seat (14, 314) of the further component (12; 212; 312), the second supporting region (120) differing from the first supporting region (20) .

8. Use according to Claim 7:
the second attachment region (118) being arranged at an end of the apparatus (110), which end lies opposite the first attachment region (18); and/or
the second supporting region (120) and the first supporting region (20) being arranged between the first attachment region (18) and the second attachment region (118); and/or
a diameter of the first attachment region (18) which is configured as a pin or as a seat differing from a diameter of the second attachment region (118) which is configured as a pin or seat; and/or
the first supporting region (20) and the second supporting region (120) projecting to a different extent.

9. Use according to one of the preceding claims:
the apparatus (210) having a plurality of first attachment regions (18; 118; 318) which are, in particular, of identical configuration; and/or
the apparatus (210) having a plurality of first supporting regions (20; 120; 320) which are, in particular, of identical configuration for supporting a plurality of plain bearing shells (16, 316) during an insertion of the plurality of plain bearing shells (16, 316) into a plurality of bearing seats (14, 314) of a plurality of components (12; 212; 312).

10. Use according to Claim 9, the apparatus (10; 110; 210; 310) having, furthermore:
an elongate body (240), in particular a bar or a rod, to which the plurality of first attachment regions (18; 118; 318) and/or the plurality of first supporting regions (20; 120; 320) are connected, in particular fastened, such that they are spaced apart from one another.

11. Use according to one of the preceding claims, comprising, furthermore:
attaching of the apparatus (10) to the component (12) by means of the first attachment region (18), with the result that the first supporting region (20) projects beyond an outer edge (28) of the bearing seat (14);
inserting of a first plain bearing shell (16), in particular a first plain bearing half shell, into the bearing seat (14) of the component (12), the first plain bearing shell (16) being supported on the projecting first supporting region (20) during the insertion, with the result that the first plain bearing shell (16) is spaced apart from the outer edge (28) of the bearing seat (14) of the component (12); and
removing of the apparatus (10) after the insertion of the plain bearing shell (16) into the bearing seat (14) of the component (12).

12. Use according to Claim 11:
the component (12) having a fastening element seat (24), in particular a screw hole, for receiving a fastening element (342), in particular a screw, for fastening a cover (312), in particular a bearing block cover or a connecting rod cover; and
the apparatus (10) being attached releasably to the component (12) by means of the first attachment region (18) which is attached in the fastening element seat (24) or to the fastening element (342).

13. Use according to Claim 11 or Claim 12, comprising, furthermore:
attaching of the apparatus (10) to a cover (312), in particular a bearing block cover or a connecting rod cover, for the component (12) by means of the first attachment region (18), with the result that the first supporting region (20) projects beyond an outer edge of a bearing seat (314) of the cover (312);
inserting of a second plain bearing shell (316), in particular a second plain bearing half shell, into a bearing seat (314) of the cover (312), the second plain bearing shell (316) being supported on the projecting first supporting region (20), with the result that the second plain bearing shell (316) is spaced apart from the outer edge of the bearing seat (314) of the cover (312) during the insertion; and
removing of the apparatus (10) after the insertion of the second plain bearing shell (316) into the bearing seat (314) of the cover (312); and
fastening of the cover (312) to the component (12).

## Revendications

1. Utilisation d'un dispositif (10 ; 110 ; 210 ; 310), notamment d'une aide à l'insertion, lors de l'insertion d'une coquille de palier de glissement (16) dans un logement de palier (14) d'un élément structural (12 ; 212 ; 312), notamment d'une partie de support de palier ou d'une partie de bielle pour un véhicule automobile, de préférence un véhicule utilitaire, le dispositif (10 ; 110 ; 210 ; 310) comprenant :
une première zone de montage (18 ; 118 ; 318) destinée au montage amovible du dispositif (10 ; 110 ; 210 ; 310) sur l'élément structural (12 ; 212 ; 312) ;
et une première zone de soutien (20 ; 120 ; 320) destinée à soutenir la coquille de palier de glissement (16, 316) pendant l'insertion de la coquille de palier de glissement (16, 316) dans le logement de palier (14, 314) de l'élément structural (12 ; 212 ; 312) ; et
une zone de préhension (22 ; 322) destinée à saisir et à guider le dispositif (10 ; 110 ; 210 ; 310), la zone de préhension (22 ; 322) étant disposée adjacente à la première zone de soutien (20 ; 120 ; 320) en vis-à-vis de la première zone de montage (18 ; 118 ; 318).

2. Utilisation selon la revendication 1, avec laquelle :
la première zone de montage (18 ; 118 ; 318) et/ou la première zone de soutien (20 ; 120 ; 320) sont fabriquées à partir d'une matière plastique et/ou d'un matériau élastomère ; et/ou
la première zone de montage (18 ; 118 ; 318) et/ou la première zone de soutien (20 ; 120 ; 320) sont fabriquées d'un seul tenant à partir d'une pièce ; et/ou la première zone de montage (18 ; 118) et la première zone de soutien (20 ; 120) forment ensemble une forme de champignon.

3. Utilisation selon la revendication 1 ou la revendication 2, avec laquelle :
la première zone de montage (18 ; 118) est réalisée sous la forme d'un tenon destiné à être enfiché dans un trou (24) de l'élément structural (12 ; 212 ; 312) ; et
la première zone de montage (318) est réalisée sous la forme d'un logement, notamment un logement de queue de vis, destiné à être emmanché sur une queue de vis d'une vis (342) fixée à l'élément structural (12 ; 212 ; 312).

4. Utilisation selon l'une des revendications précédentes, avec laquelle :
la première zone de montage (18 ; 118 ; 318) possède une portion de rétrécissement (26 ; 126 ; 326) dans laquelle la première zone de montage (18 ; 118 ; 318) se rétrécit.

5. Utilisation selon l'une des revendications précédentes, avec laquelle :
la première zone de soutien (20 ; 120 ; 320) est formée adjacente de la première zone de montage (18 ; 118 ; 318) ; et/ou
la première zone de soutien (20 ; 120 ; 320) s'étend dans le sens radial vers l'extérieur à partir d'un axe central (A), notamment d'un axe longitudinal, du dispositif (10 ; 110 ; 210 ; 310) ; et/ou
la première zone de soutien (20 ; 120 ; 320) est configurée avec symétrie de rotation autour d'un axe central (A) de la première zone de soutien (20 ; 120 ; 320) ; et/ou
la première zone de soutien (20 ; 120 ; 320) est réalisée sous la forme d'une zone de soutien de glissement avec laquelle entre en contact la coquille de palier de glissement (16, 316) lors de l'insertion en vue de réduire une abrasion de matériau au niveau d'un dos de palier de la coquille de palier de glissement (16, 316).

6. Utilisation selon l'une des revendications précédentes, le dispositif (10 ; 110 ; 210 ; 310) possédant en outre :
une surface d'appui (32 ; 132 ; 332), notamment annulaire et/ou plane, destinée à déposer le dispositif sur l'élément structural (12 ; 212 ; 312), de préférence la première zone de soutien (20 ; 120 ; 320) possédant la surface d'appui (32 ; 132 ; 332) et/ou la surface d'appui (32 ; 132 ; 332) étant adjacente de la première zone de montage (18 ; 118 ; 318).

7. Utilisation selon l'une des revendications précédentes, le dispositif (10 ; 110 ; 210 ; 310) possédant en outre :
une deuxième zone de montage (118) destinée au montage du dispositif (110) sur un élément structural (12 ; 212 ; 312) supplémentaire comprenant un logement de palier (14, 314), la deuxième zone de montage (118) se différenciant de la première zone de montage (18) ; et/ou
une deuxième zone de soutien (120) destinée à soutenir la coquille de palier de glissement (16, 316) pendant l'insertion de la coquille de palier de glissement (16, 316) dans le logement de palier (14, 314) de l'élément structural (12 ; 212 ; 312) supplémentaire, la deuxième zone de soutien (120) se différenciant de la première zone de soutien (20) .

8. Utilisation selon la revendication 7, avec laquelle :
la deuxième zone de montage (118) est disposée à une extrémité du dispositif (110) en vis-à-vis de la première zone de montage (18) ; et/ou
la deuxième zone de soutien (120) et la première zone de soutien (20) sont disposées entre la première zone de montage (18) et la deuxième zone de montage (118) ; et/ou un diamètre de la première zone de montage (18) réalisée sous la forme d'un tenon ou d'un logement se différenciant d'un diamètre de la deuxième zone de montage (118) réalisée sous la forme d'un tenon ou d'un logement, et/ou
la première zone de soutien (20) et la deuxième zone de soutien (120) font saillie avec des longueurs différentes.

9. Utilisation selon l'une des revendications précédentes, avec laquelle :
le dispositif (210) possède une pluralité de premières zones de montage (18 ; 118 ; 318), de préférence de configuration identique ; et/ou
le dispositif (210) possède une pluralité de premières zones de soutien (20 ; 120 ; 320), de préférence de configuration identique, destinées à soutenir une pluralité de coquilles de palier de glissement (16, 316) pendant une insertion de la pluralité de coquilles de palier de glissement (16, 316) dans une pluralité de logements de palier (14, 314) d'une pluralité d'éléments structuraux (12 ; 212 ; 312).

10. Utilisation selon la revendication 9, le dispositif (10 ; 110 ; 210 ; 310) possédant en outre :
un corps allongé (240), notamment une baguette ou une tige, au niveau de laquelle sont reliées, notamment fixées la pluralité de premières zones de montage (18 ; 118 ; 318) et/ou la pluralité de premières zones de soutien (20 ; 120 ; 320) en étant espacées les unes des autres.

11. Utilisation selon l'une des revendications précédentes, comprenant en outre :
montage du dispositif (10) sur l'élément structural (12) au moyen de la première zone de montage (18), de sorte que la première zone de soutien (20) fait saillie au-dessus d'une arête extérieure (28) du logement de palier (14) ;
insertion d'une première coquille de palier de glissement (16), notamment d'une première demi-coquille de palier de glissement, dans le logement de palier (14) de l'élément structural (12), la première coquille de palier de glissement (16) prenant appui sur la première zone de soutien (20) saillante pendant l'insertion, de sorte que la première coquille de palier de glissement (16) est écartée de l'arête extérieure (28) du logement de palier (14) de l'élément structural (12) ; et
retrait du dispositif (10) après l'insertion de la coquille de palier de glissement (16) dans le logement de palier (14) de l'élément structural (12).

12. Utilisation selon la revendication 11, avec laquelle :
l'élément structural (12) possède un logement d'élément de fixation (24), notamment un trou de vis, destiné à accueillir un élément de fixation (342), notamment une vis, servant à fixer un couvercle (312), notamment un couvercle de support de palier ou un couvercle de bielle ; et
le dispositif (10) est monté de manière amovible sur l'élément structural (12) au moyen de la première zone de montage (18), qui est montée dans le logement d'élément de fixation (24) ou sur l'élément de fixation (342) .

13. Utilisation selon la revendication 11 ou la revendication 12, comprenant en outre :
montage du dispositif (10) sur un couvercle (312), notamment un couvercle de support de palier ou un couvercle de bielle, pour l'élément structural (12) au moyen de la première zone de montage (18) de sorte que la première zone de soutien (20) fasse saillie au-dessus d'une arête extérieure d'un logement de palier (314) du couvercle (312) ;
insertion d'une deuxième coquille de palier de glissement (316), notamment d'une deuxième demi-coquille de palier de glissement, dans le logement de palier (314) du couvercle (312), la deuxième coquille de palier de glissement (316) prenant appui sur la première zone de soutien (20) saillante, de sorte que pendant l'insertion,
la deuxième coquille de palier de glissement (16) est écartée de l'arête extérieure du logement de palier (314) du couvercle (312) ; et
retrait du dispositif (10) après l'insertion de la deuxième coquille de palier de glissement (316) dans le logement de palier (314) du couvercle (312) ; et fixation du couvercle (312) à l'élément structural (12).
